# EUROPEAN PATENT SPECIFICATION

(11) **EP 3 735 881 B1**
(45) Date of publication and mention of the grant of the patent: **14.12.2022**
(21) Application number: 20173724.4
(22) Date of filing: 08.05.2020
(51) Int. Cl.: A47J 43/07

(54) **BLENDER**
MIXER
MÉLANGEUR

(30) Priority: 08.05.2019 KR 20190053929; 29.08.2019 KR 20190106703
(43) Date of publication of application: 11.11.2020
(73) Proprietor: LG Electronics Inc., SEOUL, 07336 (KR)
(72) Inventor: KIM, Youngsoo, 08592 Seoul (KR); SEOK, Junho, 08592 Seoul (KR); JEONG, Jeonghoon, 08592 Seoul (KR); JUNG, Sangjin, 08592 Seoul (KR); KIM, Mingyu, 08592 Seoul (KR)
(74) Representative: Ter Meer Steinmeister & Partner

(56) References cited:
- EP-A1- 3 264 014
- WO-A1-2014/040544
- WO-A1-2017/039328
- WO-A2-2016/126050
- US-A1- 2002 176 320
- US-A1- 2011 222 367
- US-A1- 2016 117 022

## Description

### BACKGROUND

The present disclosure relates to a blender.

In general, a blender is a household appliance that chops food contained in a container, crushes the food into powder, or makes the food into a state such as a liquid by a blade rotated by an electric motor and is also commonly referred to as a mixer.

In a typical blender, a container is seated on an upper surface of a main body in which a motor is built, and when the container is seated, a blade inside the container is connected to a rotation shaft of the motor to be rotatable. In addition, the user can drive the motor by operating the main body after putting food in the container, and the blade is rotated by the driving of the motor to crush the food.

Such a blender has recently been developed as a large-capacity blender having a large container size, and a blender using a motor rotated at ultra-high speed to be capable of crushing various foods more effectively has been developed.

In addition, the blender may perform manipulation for crushing various foods, and a blender has been developed to crush various foods through simple manipulation.

In the International Patent Publication PCT/EP2016/074116, a control button that is manipulated to be rotated may be provided on the front surface of a base part on which the container is seated. The user manipulates the control button to operate the blender according to a preset cooking program, and a blender capable of inputting operation of the blender by simple manipulation of the user is disclosed. In addition, a display screen may be provided on the front surface of the base part, a cooking program selected through the control button may be displayed through the display screen, and a blender capable of easily inputting manipulation by a user is disclosed.

However, in this related art, the display screen including a knob has a structure of being always exposed to the outside of the blender. Therefore, there is a problem in that an outer appearance due to the exposure of the display screen is inhibited regardless of whether or not the blender is used.

In addition, there is a problem that the entire display screen needs to be replaced when the display screen malfunctions.

In addition, there is a problem in that the display screen is disposed on the front surface of the blender with the knob and thus the manipulation recognition is not easy.

US 2011/222367 A1 presents a flexible touchpad for a kitchen appliance that includes a first surface having at least one button feature integrally molded therein and extending outwardly in a first direction beyond a surrounding portion of the first surface. An opposing second surface has at least one post extending outwardly in a second direction beyond a surrounding portion of the second surface. The at least one post defines a first end, an opposing second free end and a longitudinal axis extending therebetween. The longitudinal axis is generally aligned with the at least one button feature.

### SUMMARY

An object of an embodiment of the present disclosure is to provide a blender with an improved outer appearance while being capable of displaying an operation on the outside of a metal main body and the manipulating thereof.

An object of an embodiment of the present disclosure is to provide a blender with improved manipulability and recognition performance.

An object of an embodiment of the present disclosure is to provide a blender with improved maintenance performance.

The object is solved by the features of the independent claim.

Preferred embodiments are given in the dependent claims.

A blender may include an outer case made of a metal material and forming an outer appearance, an inner case configured to be received inside the outer case, ajar configured to be seated on a seating portion formed on an upper surface of the inner case and provided with a blade device for crushing food, a motor assembly provided inside the inner case and connected to the blade device to rotate the blade device, a mounting portion recessed from the upper surface of the inner case, and a touch device mounted on the mounting portion and through which a user's manipulation is input, in which the touch device is in close contact with a rear surface of the outer case in a state of being mounted on the mounting portion and may recognize touch manipulation of the outer case by the user.

The mounting portion may be formed to be stepped downward so that the touch device can be seated.

The mounting portion may be formed on one side edge of the inner case surface.

The outer case may be formed in a hexahedral shape with a lower surface open to receive the inner case therein.

Preferably, the touch device may be in close contact with the outer case in a state where the inner case is mounted inside the outer case.

The mounting portion may include at least one support protrusion protruding to press and support the touch device toward the outer case.

A touch manipulating portion for inducing user's touch manipulation may be formed on an upper surface of the outer case corresponding to the touch device.

Preferably, the touch manipulating portion may be formed by surface processing or printing.

The touch device may include a touch PCB on which a touch sensor sensing user's touch manipulation is mounted, a touch PCB case in which the touch PCB is received and fixedly mounted to the inner case, and a touch booster which is mounted on the touch PCB case and which is in close contact with the inner surface of the outer case and transmits pressure to the touch sensor when the outer case is touched and manipulated.

Preferably, the touch manipulating portion, the touch booster, and the touch sensor may be disposed on the same extension line.

A plurality of case fastening hooks may extend downward along the circumference of the touch PCB case

Preferably, the mounting portion may include a fastening hole into which the fastening hook is inserted to constrain the touch PCB case

The touch booster may be configured to be elastically deformable.

A booster opening in which the touch booster is mounted may be formed on an upper surface of the touch PCB case

Preferably, an adhesive member which adheres the touch PCB to the outer case may be provided around the booster opening.

A display device which displays an operating state of the blender may be mounted on the mounting portion.

Preferably, the display device may be disposed side by side with the touch device.

The display device may include at least one of a display PCB in which a large number of LEDs are disposed, and a display PCB case in which the display PCB is received.

The touch PCB and the display PCB may be connected by a connector.

A plurality of through-holes which are formed through a position corresponding to the LED and through which the light of the plurality of LEDs are transmitted may be formed on the upper surface of the outer case.

Preferably, a display portion which outputs information in the form of letters or numbers by combining the plurality of through-holes may be formed.

A blender according to the present embodiment may include an outer case, an inner case received inside the outer case, ajar detachably provided on the inner case and provided with a blade device for crushing food, a motor assembly inside the inner case.

Preferably, a mounting portion may be provided being recessed from the upper surface of the inner case.

Preferably, a touch device may be mounted on one side of the mounting portion and being in close contact with the outer case in a mounted state to input a touch manipulation of the outer case.

Preferably, a display device may be mounted on the other side of the mounting portion and emitting light through the outer case in a mounting state to display an operating state.

A blender may include an outer case made of a metal material and forming an outer appearance, an inner case configured to be received inside the outer case, a jar detachably provided on a seating portion formed on the inner case and provided with a blade device for crushing food, a motor assembly provided inside the inner case and providing rotation power of the blade device, a mounting portion recessed from the upper surface of the inner case, a touch device mounted on one side of the mounting portion and being in close contact with the outer case in a mounted state to input a touch manipulation of the outer case, and a display device mounted on the other side of the mounting portion and emitting light through the outer case in a mounting state to display an operating state.

A display opening which is opened at a position on which the display device is mounted may be formed on the mounting portion.

Preferably, a portion of the display device may be disposed below the mounting portion, and a portion of the rest of the display device may protrude upward through the display opening.

The display device may include at least one of a display PCB in which a plurality of LEDs are disposed, a light guide which passes through the display opening to be in contact with the outer case and guides light emitted from a plurality of LEDs mounted on the display PCB to transmit a plurality of through-holes formed in the outer case, and a display PCB case which is fixedly mounted on a lower surface of the mounting portion and in which the display PCB is received.

The blender may further include a display portion configured to output information in the form of letters or numbers by combining the plurality of through-holes.

A case fastening portion to which a screw for fixing the display device is fastened may be formed on the display PCB case, and a case coupling portion to which a screw passing through the case fastening portion is fastened may be formed inside the inner case.

A touch opening may be formed at one side of the mounting portion corresponding to the touch device, and the touch display device and the display device may be electrically connected by a connector passing through the touch opening.

The blender according to an embodiment of the present disclosure can expect the following effects.

The main body of the blender consists of an outer case made of a metal material, and an inner case may be made of plastic material or other suitable material may be provided inside the outer case.

In addition, a mounting portion on which a display device and/or a touch device for displaying information is mounted is formed in the inner case.

These components are shielded by the outer case.

Accordingly, there is an advantage in that it is possible to check the operation input and the state of the blender while improving the outer appearance since the outer appearance of the main body is simple.

In particular, the outer case has a display portion composed of a plurality of through-holes.

The through-holes can display information by numbers or letters by the light of the LED emitted from the display device inside the inner case.

In addition, by directly touching the touch manipulating portion of the outer case, manipulation input through the touch sensor of the touch device becomes possible.

Therefore, there is an advantage that both the manipulation input and the status display of the blender are possible while maintaining the outer appearance of the outer case.

In addition, the display device and the touch device are continuously disposed to each other.

The display portion and the touch manipulating portion are continuously disposed, and thus an effect of improving user manipulability and recognition performance is provided.

In particular, there is an advantage that a display portion and a touch manipulating portion are disposed on an upper surface of the main body, so that a user can easily identify the display portion and easily access to the touch manipulating portion and input the manipulation thereof.

In addition, the display portion is disposed on the upper surface of the main body so that the user can easily recognize the display portion and the discrimination power can be improved by displaying numbers and letters through the light transmission. In addition, the touch manipulating portion is also located on the upper surface of the main body for easy user access and is continuously disposed with the display portion to allow easier manipulation while viewing the display portion.

In addition, the touch device is fixedly mounted on the upper surface of the mounting portion, and accordingly, the touch device can be in more close contact with the rear surface of the inner case so that the manipulation input can be ensured during touch manipulation of the inner case.

In addition, the rest of the display device except for the portion where the LED is disposed is disposed on the lower surface of the mounting portion and may be fixedly mounted inside the inner case.

Accordingly, the display device and the touch device can be disposed separately from each other and can be assembled on the upper surface and the lower surface of the mounting portion, respectively, so that the display device and the touch device can be fixedly and securely mounted on the narrow inner case.

In addition, since the display device and the touch device have an assembly mounting structure that is independent of each other, it is possible to expect an effect of improving maintenance performance by allowing independent replacement when replacing two components having different life and abnormal frequencies.

In addition, the display device and the touch device are connected by a connector, so that there is an advantage that the disposition and assembly of electric wires can be made easier.

In a further realization a blender as described above is provided having no mounting portion and further includes the other elements. In its simplest form a blender according to the present embodiment may include an outer case, an inner case received inside the outer case, ajar detachably provided on a seating portion formed on the inner case, a motor assembly provided inside the inner case and providing rotation power of the blade device. Such blender may be combined with any of the details as described above or in the following detailed description.

### BRIEF DESCRIPTION OF THE DRAWING

Fig. 1 is a front view illustrating a blender according to an embodiment of the present disclosure.
Fig. 2 is a perspective view illustrating the blender.
Fig. 3 is a longitudinal sectional view illustrating the blender.
Fig. 4 is a perspective view illustrating a main body that is one component of the blender.
Fig. 5 is a cross-sectional view taken along line V-V' in Fig. 4.
Fig. 6 is an exploded perspective view illustrating the main body as viewed from above.
Fig. 7 is an exploded perspective view illustrating the main body as viewed from below.
Fig. 8 is an exploded perspective view illustrating components constituting the outer appearance of the main body.
Fig. 9 is an exploded perspective view illustrating a coupling structure between an inner case which is one component of the main body, a touch device, and a display device.
Fig. 10 is a perspective view illustrating the inner case as viewed from below.
Fig. 11 is a bottom view illustrating the inside of the main body in a state where the touch device and the display device are mounted.
Fig. 12 is an enlarged view illustrating a state where the touch device and the display device are mounted as viewed from below.
Fig. 13 is a cross-sectional view taken along line XIII-XIII' of Fig. 2.
Fig. 14 is a cross-sectional view taken along line XIV-XIV' of Fig. 4.

### DETAILED DESCRIPTION OF THE EMBODIMENTS

Hereinafter, a specific embodiment of the present disclosure will be described in detail with the accompanying drawings. However, the present disclosure may not be limited to the embodiments in which the spirit of the present disclosure is presented, and it is easy to suggest other embodiments falling within the scope of the present disclosure or other disclosures that are degenerate by adding, changing, deleting another component, or the like.

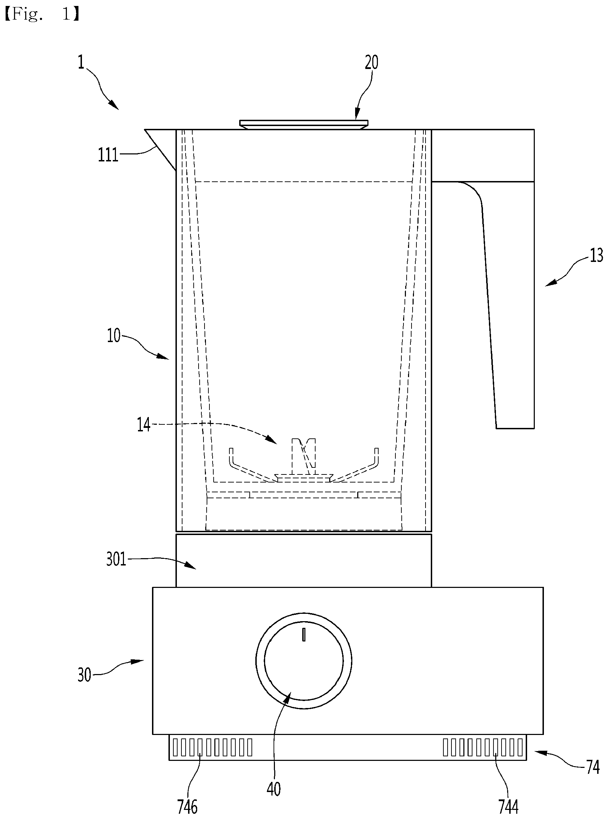

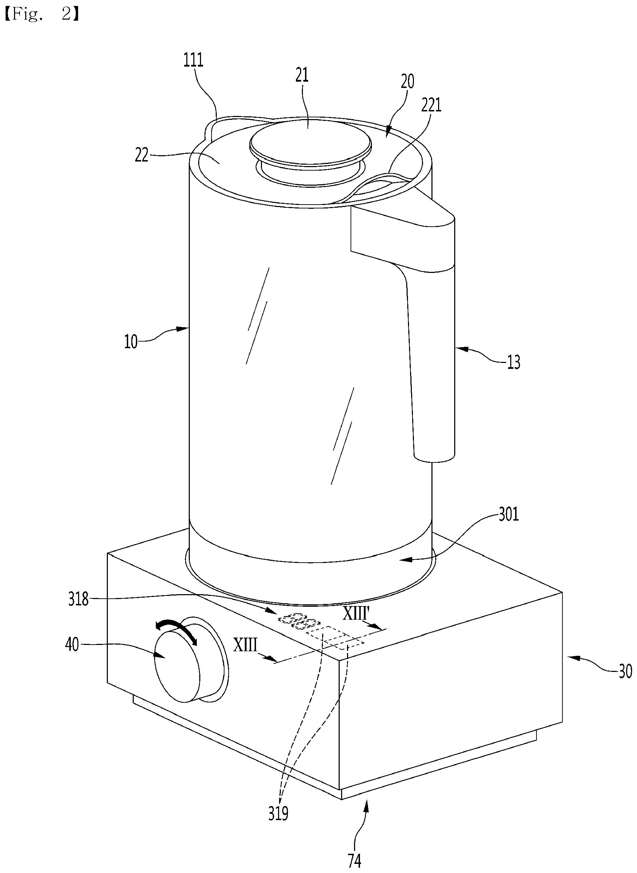

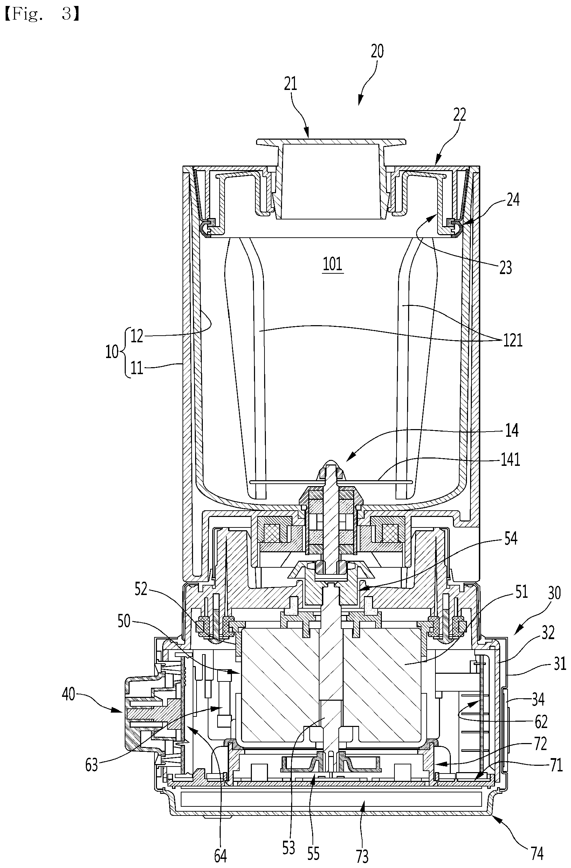

Fig. 1 is a front view illustrating a blender according to an embodiment of the present disclosure, Fig. 2 is a perspective view illustrating the blender, and Fig. 3 is a longitudinal sectional view illustrating the blender.

For the convenience of explanation and understanding, the direction is first defined. The position at which a knob 40 is formed is defined as a front surface or a front side.

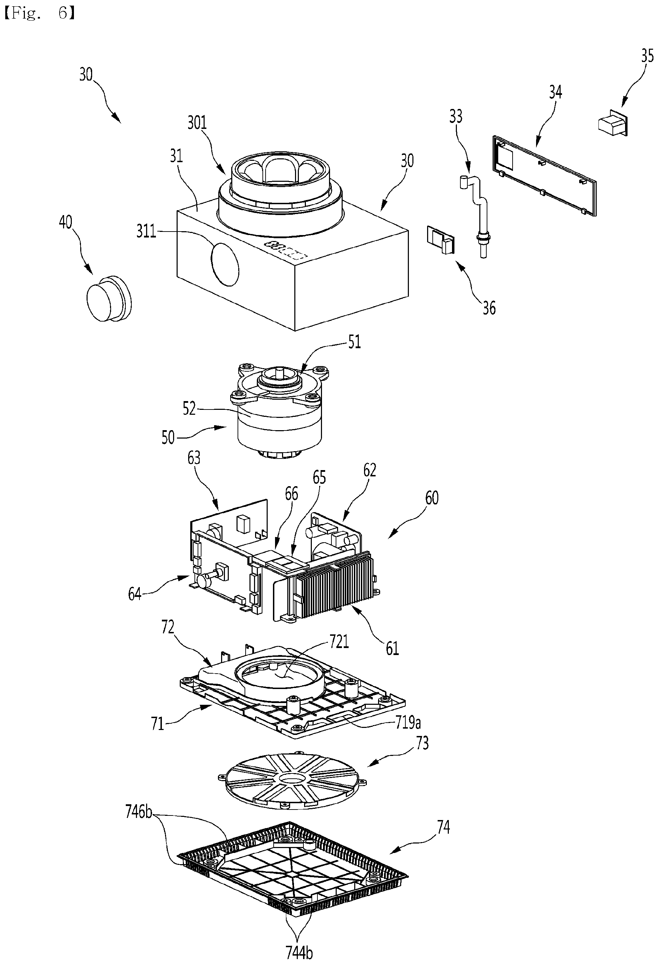

The portion to which a power connector (35 in Fig. 6) is connected is defined as a rear surface or a rear side. In addition, the position of the bottom of a main body 30 may be referred to as a lower surface or lower side, and the position of the upper end of the jar 10 may be referred to as an upper surface or an upper side. In addition, the left side based on the knob 40 may be referred to as a left surface or a left side, and the right side based on the knob 40 may be defined as a right side or a right side.

As illustrated, the blender 1 according to an embodiment of the present disclosure may include the main body 30 disposed on the bottom surface, and ajar 10 (which can also be called vessel or container) seated on the upper portion of the main body 30.

The main body 30 may be provided with electrical devices and components, including a motor assembly 50 and a controlling equipment like a PCB device 60 for the operation of the blender 1. In addition, manipulating portions 40 and 310b for manipulating the operation of the blender 1 and a display portion 318 for displaying operation thereof may be provided.

The main body 30 may be formed in a hexahedral shape as a whole, and a seating portion 301 for seating the jar 10 may be formed on an upper surface of the main body 30. The seating portion 301 may be configured to detach the jar 10, preferably in the vertical direction.

The outer appearance of the main body 30 may be formed by an outer case 31 having a metal material or any material having a metal texture.

The outer case 31 may be formed in a hexahedral shape with a bottom surface open. Preferably, the whole lower portion of the main body is open. In addition, an inner case 32 may be formed inside the outer case 31, and space in which the motor assembly 50, the PCB device 60, and the like are mounted may be provided inside the inner case 32.

A knob 40 for a user to set the manipulation of the blender 1 may be provided on the main body, preferably on the front surface of the main body 30. Preferably, there is a single knob 40. The knob 40 protrudes from the front surface of the main body 30 and can operate and set the operation of the blender 1 by a rotation manipulation.

A bottom cover 74 may be provided on the lower surface of the main body 30. The bottom cover 74 may be coupled with the outer case 31 and/or the inner case 32 and may be formed to be in contact with the bottom surface on which the blender 1 is installed. In addition, the bottom cover 74 allows the outer case 31 and the inner case 32 to be spaced apart from the bottom surface.

The bottom cover 74 may include at least one of a cover suction port 744 and a cover discharge port 746 through which cooling air is suctioned and/or discharged into and out of the main body 30 can be formed.

A display portion 318 for visualizing an operation state of the blender 1 may be provided on the upper surface of the main body 30. For example, the display portion 318 may have a shape such as at least one seven-segment display.

The display portion 318 may be formed of a combination of minute or small or tiny through-holes 318a having diameters smaller than 10µm. The through-holes 318a penetrate the outer case 31. In detail, the through-hole 318a may be located at a position corresponding to a plurality of LEDs 662a mounted on the display device 66 to be described below.

A plurality of through-holes may be combined to be formed in the shape of signs, letters or numbers. Accordingly, according to the lighting state of the LED 662a, the display portion 318 may be configured to represent other signs, letters or numbers. In addition, although not illustrated in detail, a hole-filling member may be filled in the through-hole 318a. The hole-filling member may be made of, for example, a transparent resin material such as silicone, acrylic, or the like and is formed to allow light to pass through so that light emitted from the LED 662a can be transmitted. In addition, it is possible to prevent water or foreign matters from staining the outer case 31 or penetrating the through-hole 318a.

In addition, a touch manipulating portion 319 capable of manipulating the start or stop the operation of the blender 1 may be provided on an upper surface of the main body 30. The touch manipulating portion 319 may be disposed side by side on the side of the display portion 318. In other words, when the user wants to manipulate the touch manipulating portion 319, the touch manipulating portion 319 can be disposed close to the display portion 318 enough to be recognized at once.

The touch manipulating portion 319 may be formed at a position corresponding to the touch sensor 654 of the touch device 65 to be described below. For example, the touch manipulating portion 319 may be formed on the outer case 31 by printing or may be formed by surface processing such as etching. In addition or alternatively, the touch manipulating portion 319 may be formed by attaching a film. Accordingly, the touch manipulating portion 319 may induce a user to manipulate by touching an exact position that can be sensed or recognized by the touch sensor 654 and may indicate an accurate touch position or manipulation function to the user.

At least one of the knob 40 and the touch device 65 operated for inputting and setting an operation of the blender 1 may be referred to as a manipulating portion.

In addition, a seating portion 301 may be formed on the upper surface of the main body 30. The seating portion 301 may protrude from the upper surface of the main body 30, and a part of the seating portion 301 may be inserted into the lower surface of the jar 10 to stably support the jar 10. When the jar 10 is seated on the seating portion 301, the motor assembly 50 and the blade device 14 inside the jar 10 are coupled to each other to transmit the rotational force to the blade device 14.

The seating portion 301 may be located on one side slightly biased from the center of the main body 30. The entire horizontal length including a handle 13 of the jar 10 and the horizontal length of the main body 30 are formed to correspond to each other. Thus, there is no protruding component when the jar is seated on the main body. Therefore, the center of the food receiving space of the jar 10 may be located to be eccentric from the center of the main body 30, and the center of the seating portion 301 is also on the same extension line as the center of the jar 10. In addition, the knob 40 may be located at a position corresponding to the centerline of the seating portion 301 and the jar 10 and may be located on one side of the front surface of the main body 30, which is eccentric.

The outer appearance of the seating portion 301 may also be made of the same material as the outer case 31. The seating portion 301 may be made of a metal material or a material having a metal texture to have a sense of unity with the outer appearance of the main body.

A motor assembly 50 may be mounted inside the main body 30, preferably under the seating portion 301. The motor assembly 50 is provided for rotation of the blade device 14 inside the jar 10. The blade device can be rotated at a high speed. In addition, the the rotation speed of the motor assembly 50 can be adjusted by manipulation of the knob 40.

The upper end of the motor assembly 50 may be connected to the blade device 14 inside the jar 10. Preferably, a cooling fan 55 may be provided at a lower end of the motor assembly 50. So, when the motor assembly 50 is driven, the cooling fan 55 can rotate simultaneously with the blade device 14 to force the flow of cooling air inside the main body 30.

Meanwhile, one or more PCB devices 60 may be disposed on the inner wall surface of the inner case 32 forming the inner surface of the main body 30. The one or more PCB devices 60 may be provided and may be disposed inside or on the circumference of the inner surface of the main body 30, that is, on at least one of the front surface and the rear surface, and both left and right surfaces thereof, respectively.

In addition, the opened lower surface of the inner case 32 may be shielded by the base plate 71. Preferably, an air guide 72 for guiding the discharge of cooling air suctioned by the cooling fan 55 may be provided on the base plate 71.

A predetermined space may be formed between the base plate 71 and the bottom cover 74, and a wireless power device 73 may be provided between the base plate 71 and the bottom cover 74. The wireless power device 73 is capable of supplying power to the motor assembly 50 in a wireless manner using induced electromotive force.

Meanwhile, the jar 10 may be formed in a cylindrical shape corresponding to the outer diameter of the seating portion 301, and the upper surface of the jar is opened to form a food receiving space 101 therein.

The jar 10 may be formed of a material such as glass, Tritan, transparent plastic, or the like to check the food state inside during the operation of the blender 1. In addition, the jar 10 may include an outer jar 11 forming an outer shape and an inner jar 12 forming an inner space in which food is received.

The inner jar 10 and the outer jar 11 are combined to form the overall shape of the jar 10, and the jar 10 may have a double-wall structure. In addition, the outer jar 11 may be formed in a cylindrical shape having the same outer diameters at the upper end and the lower end, so that the outer appearance of the jar 10 can be seen neatly. In addition, the outer diameter of the outer jar 11 is formed to be the same as the outer diameter of the seating portion 301 so that the main body 30 and the jar have a sense of unity in a state where the jar 10 is mounted on the main body.

In addition, a main body receiving portion 102 may be formed on the lower surface of the outer jar 11. The main body receiving portion 102 forms space recessed upward from the lower surface of the outer jar 11 and forms space into which a second seating portion 325 to be described below can be inserted. By the coupling of the main body receiving portion 102 and the second seating portion 325, the jar 10 may maintain a state of being attached to the seating portion 301.

The jar 10 may be provided with a blade device 14 at the center of the inner lower surface. The blade device 14 includes a plurality of blades 141 and may be connected to the motor assembly 50. Therefore, when the motor assembly 50 is driven in a state where the jar 10 is seated on the main body 30, the blade 141 may be rotated to crush or cut food inside the jar 10.

In addition, a plurality of inner guides 121 for guiding food to be rotated may be formed inside the jar 10. The inner guide 121 may extend upward from a lower end of the inner surface of the jar 10 to a predetermined length and may extend to a lower surface of the lid 20 when the lid 20 is mounted.

Meanwhile, a spout 111 that can pour the crushed food may protrude on the upper end of the jar 10, and a handle 13 may protrude on one side facing the spout 111. The handle 13 protrudes outward from the upper end of the jar 10 and then extends downward to allow the user to lift or move the jar 10. The protruding end portion of the handle 13 may be located on the same extension line as the side end of the main body 30.

In addition, the lid 20 may be mounted on the opened upper surface of the jar 10. The lid 20 may shield the opened upper surface of the jar 10, and the user holds the lid handle 13 and separates the lid 20 from the jar 10 to open and close the opened upper surface of the jar 10. The lid 20 may include a lid upper portion 22, a lid lower portion 23, and the lid handle 221, and a lid gasket 24 may be provided along the circumference of the lid 20.

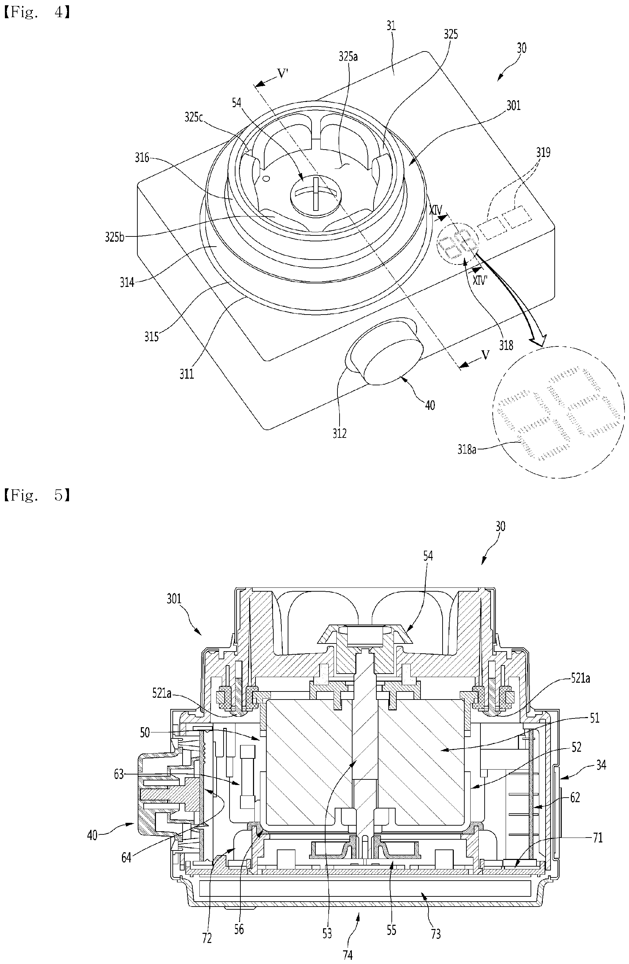

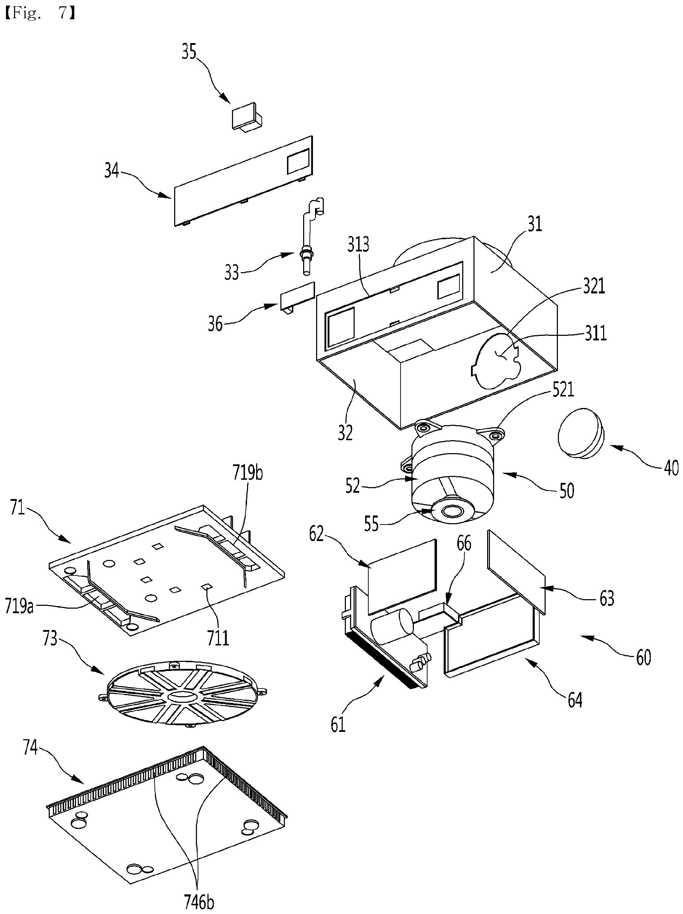

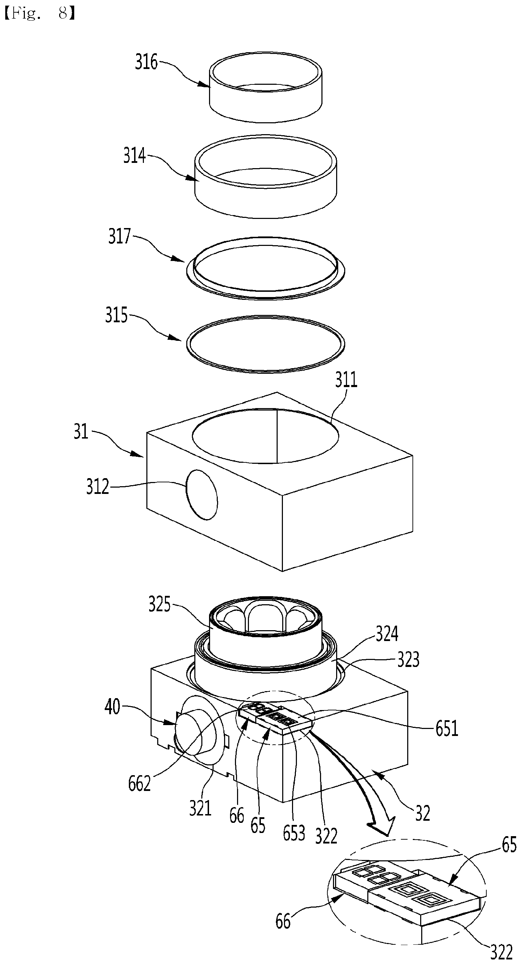

Fig. 4 is a perspective view illustrating a main body that is one component of the blender, Fig. 5 is a cross-sectional view taken along line V-V' in Fig. 4, Fig. 6 is an exploded perspective view illustrating the main body as viewed from above, Fig. 7 is an exploded perspective view illustrating the main body as viewed from below, and Fig. 8 is an exploded perspective view illustrating components constituting the outer appearance of the main body.

As illustrated in the drawings, the main body 30 is formed in a box shape of a rectangular parallelepiped, a seating portion 301 for seating the jar 10 protrudes on the upper surface of the main body 30, and the main body 30 may have a structure in which a knob 40 for manipulating the operation of the blender 1 is disposed on the front surface thereof.

In addition, the internal and overall structure of the main body 30 is formed by the inner case 32, and the outer case 31 is mounted outside the inner case 32 to form the outer appearance of the main body 30. To this end, the inner case 32 may be made of a plastic material, preferably injected, to provide a structure in which internal and external components of the main body 30 can be mounted. In addition, the outer case 31 may be made of a metal material such as stainless steel, and a plate-shaped material may be bent and bonded to provide a very clean and robust outer appearance. Therefore, the outer case 31 can form the outer appearance of the main body 30 in the shape of a hexahedron with a lower surface open, and the inner case 32 provides a structure in which a plurality of configurations can be mounted inside the outer case 31.

The outer case 31 and the inner case 32 have a shape in which a lower surface is opened, and a motor assembly 50 and one or more PCB devices 60 may be disposed therein. Preferably, the opened lower surface of the inner case 32 is shielded by the base plate 71, and the lower surface of the main body 30 may be formed by the bottom cover 74.

Looking at the structure of the main body 30 in more detail, the outer case 31 may include a quadrangular upper surface, a front surface, a rear surface, and both left and right surfaces, which extend downward along the circumference of the upper surface.

An upper surface opening 311 may be formed on the upper surface of the outer case 31. The upper surface opening 311 may be formed to have a diameter equal to or slightly larger than the outer diameter of the seating portion 301. Therefore, when the inner case 32 and the outer case 31 are coupled, an upper portion of the inner case 32 forming the seating portion 301 penetrates the upper surface opening 311 to be exposed to the outside of the outer case 31.

Meanwhile, a first seating portion deco or covering 314, a second seating portion deco or covering 316, a lower deco or covering 315, and a connecting deco or covering 317 are mounted on an upper portion of the inner case 32 protruding outward of the outer case 31. The seating portion 301 may have an overall outer appearance by the first seating portion deco 314, the second seating portion deco 316, the lower deco 315, and the connecting deco 317. The first seating portion deco 314 and the second seating portion deco 316 may be made of the same material as the outer case 31 or a material having the same texture as the outer case 31.

The first seating portion deco 314 and the second seating portion deco 316 may be formed in a ring shape having a predetermined height. The first seating portion deco 314 has a larger diameter than the second seating portion deco 316, and the connecting deco 317 may be formed in a ring shape connecting an upper end of the first seating portion deco 314 with the second seating portion deco 316.

In addition, the first seating portion deco 314, the second seating portion deco 316, and the connecting deco 317 may be mounted on outer surfaces of a first seating portion 324 and a second seating portion 325 formed in the inner case 32 and the upper surface of the first seating portion 324.

The second seating portion 325 extends upward from the upper surface of the first seating portion 324, and insertion space 325a in which a jar coupling portion (not illustrated) formed in the blade device mounting portion 103 can be received may be formed therein. Ajar coupling protrusion 325b and a jar coupling groove 325c coupled with a jar coupling portion protruding from the lower surface of the jar 10 may be formed on the inner surface of the insertion space 325a. In addition, a plurality of the jar coupling protrusions 325b and a plurality of the jar coupling grooves 325c may be continuously disposed along the inner surface of the second seating portion 325. Therefore, when the jar 10 is mounted on the seating portion 301, the jar coupling portion can be fixedly mounted in place by matching with the jar coupling protrusion 325b and the jar coupling groove 325c.

In addition, a knob hole 312 in which the knob 40 is located may be formed on the front surface of the outer case 31. The knob 40 may penetrate the knob hole 312 and protrude toward the front of the main body 30.

In addition, a plate groove 313 recessed to receive the rear plate 34 may be formed in the rear surface of the outer case 31. A communication device 36 may be mounted on the inner rear surface of the inner case 32. A power connector 35 for supplying power to the main body 30 may be mounted on the plate groove 313. The power connector 35 may be mounted through the rear plate 34.

Meanwhile, the inner case 32 may be formed in a box shape with a lower surface open, and a seating portion 301 may be formed on the upper surface of the inner case 32. The inner case 32 may be composed of a planar upper surface as a whole, a front surface, a rear surface, and both left and right surfaces, which extend vertically downward along the circumference of the upper surface. The inner case 32 may be made of a plastic material to be shaped into a relatively complex shape and may provide a structure for mounting the motor assembly 50 and the PCB device 60 therein.

A knob mounting hole 321 may be formed on the front surface of the inner case 32. The knob mounting hole 321 may be opened so that the knob 40 may be disposed in a state of being mounted on the main PCB device 64, and may be located behind the knob hole 311.

A mounting portion 322 may be formed on the upper surface of the inner case 32. The mounting portion 322 may be recessed such that the display device 66 and the touch device 65 are mounted. The mounting portion 322 is formed to be stepped, and the display device 66 and the touch device 65 may be shielded by the outer case 31 in a state of being mounted on the mounting portion 322.

A display portion 318 preferably formed in a 7-segment shape by a plurality of minute holes may be formed on the outer case 31 corresponding to the display device 66, and light emitted from the display device 66 behind the through holes is transmitted to be capable of displaying the operation information of the blender 1 in signs, numbers or letters.

A touch manipulating portion 319 may be formed on the upper surface of the outer case 31 corresponding to the touch device 65 by printing or surface processing. The touch device 65 is located inside the outside case 31 and/or on the inner case 32 below the touch manipulating portion 319. Therefore, the user can input manipulation for the operation of the blender 1 to the touch device 65 by touching the touch manipulating portion 319. A plurality of touch manipulating portions 319 may be provided. For example, one touch manipulating portion 319 may allow the start or stop and end of the operation of the motor assembly 50 to be input, while the other touch manipulating portion 319 is pressed, the motor assembly 50 can be operated, and if the other touch manipulating portion 319 is not pressed, the motor assembly 50 can be stopped.

Meanwhile, a motor assembly 50 may be provided in the inner space of the inner case 32. The motor assembly 50 is for rotation of the blade device 14 and may be located at the lower side corresponding to the center portion of the seating portion 301.

The motor assembly 50 may include a motor 51 including a motor shaft 53 extending in the vertical direction, a motor housing 52 in which the motor 51 is received, a motor-side connecting portion 54 provided on an upper end of the motor shaft 53, and a cooling fan 55 provided at the lower end of the motor shaft 53.

At the upper end of the motor shaft 53, the motor-side connecting portion 54 that is coupled to the blade device 14 may be provided when the jar 10 is mounted. The motor-side connecting portion 54 may be coupled to the blade device 14 to transmit the rotational force of the motor 51. The motor-side connecting portion 54 may be exposed through the upper surface of the inner case 32 and may be located at the center of the insertion space 325a inside the seating portion 301.

The cooling fan 55 is exposed to the outside of the motor housing 52 and may be received inside an air guide 72 to be described below. Therefore, when the cooling fan 55 is operated, air passing through the motor housing 52 may be guided inside the air guide 72.

In addition, airflow may be generated inside the main body 30 according to the driving of the cooling fan 55, and in particular, at least some of the PCB devices 60 disposed outside the motor housing 52 is located on the airflow path generated by the driving of the cooling fan 55 to be capable of being cooled together.

One or more PCB devices 60 for the operation of the blender 1 may be provided inside the inner case 32. The one or more PCB devices 60 may be disposed on the inner surface of the inner case 32, respectively. The one or more PCB device 60 may be separated by functions and may be disposed in parallel to the wall surface of the inner case 32 at an adjacent position of the inner surface to the inner case 32.

In other words, the PCB device 60 may be disposed to surround the motor assembly 50 from the outside with respect to the motor assembly 50. Accordingly, when the motor assembly 50 is rotated, the PCB devices 60 may be located on a flow path of air passing through the motor assembly 50, and the one or more PCB devices 60 may be cooled by air. In addition, more effective heat dissipation or cooling may be possible by allowing the cooling airflow to be concentrated to a PCB particularly having a high power consumption or heating temperature among the one or more PCB devices 60.

In detail, the PCB devices 60 may include a main PCB device 64, an inverter PCB device 61 for controlling the motor 51, a power PCB device 62 for controlling input power, and a filtering PCB device 63 for removing noise. Of course, the PCB devices 60 may be further provided with an additional PCB device 60 according to the function of the blender 1, or some of the PCB devices 60 may be omitted or integrated on one or more combined PCBs.

The main PCB device 64 is for controlling the overall operation of the blender 1, in particular, the knob 40 is mounted to receive the manipulation of the knob 40. The main PCB device 64 may be mounted on the inner front surface of the inner case 32 corresponding to the position where the knob 40 is mounted. The main PCB device 64 may be connected to the display device 66 and the touch device 65. Accordingly, the main PCB device 64 may transmit operation information of the blender 1 to the display device 66 and receive a manipulation signal of the touch device 65 when the touch device 65 is manipulated.

The power PCB device 62 is for supplying power input to the inside of the blender 1 and may be mounted on an inner rear surface inside the inner case 32 in which the power connector 35 is disposed. The power PCB device 62 may be generally called SMPS (switching mode power supply). The power PCB device 62 converts and supplies power input from the power connector 35 to a stable power state for driving the blender 1. In addition, the power PCB device 62 may receive power from the wireless power device 73 when the blender 1 is used wirelessly, and likewise, the power PCB device converts and supplies the power into a stable power state for driving the blender 1.

The inverter PCB device 61 is for controlling the speed of the motor 51 and is configured to control the rotational speed of the motor 51 to be variable according to a user's manipulation. Due to the operating characteristics, the inverter PCB device 61 may generate heat at a high temperature during operation, and thus, intensive cooling may be required. To this end, the inverter PCB device 61 may be provided with a heat dissipation member 612 on the inner surface of the inner case 32 corresponding to the plate suction port 719a to allow intensive cooling. The inverter PCB device 61 will be described in more detail below.

The filtering PCB device 63 may be connected to the power PCB device 62 and configured to remove noise on a power frequency outputted from the power PCB device 62. In addition, the filtering PCB device 63 may be provided on one side of the inner surface of the inner case 32 facing the inverter PCB 611.

As such, the main PCB device 64, the power PC device 62, the inverter PC device 61, and the filtering PCB device 63 may be respectively disposed at positions facing each other. In other words, the PCB devices 60 may be disposed in a form that surrounds the motor assembly 50 at four surfaces of the front, rear, left, and right sides in a state where the motor assembly 50 is placed at the center.

Meanwhile, a base plate 71 may be provided at a lower end of the inner case 32. The base plate 71 shields the opened lower surface of the inner case 32 and may support some of the components inside the inner case 32.

The base plate 71 may be formed in a plate shape and may be formed in a shape corresponding to the opened lower surface of the inner case 32. In addition, the circumference of the base plate 71 may be coupled with the lower end of the inner case 32, and the space between the circumference of the base plate 71 and the lower end of the inner case 32 may be airtight.

In addition, the plate suction port 719a and/or the plate discharge port 719b may be formed on both left and right sides of the base plate 71, respectively. The plate suction port 719a is formed along one side end of the base plate 71 and forms a passage through which air for cooling flows into the inner case 32 when the motor assembly 50 is driven. In addition, the plate discharge port 719b is formed along the other one side end of the base plate 71 and forms a passage through which cooling air inside the inner case 32 is discharged to the outside of the inner case 32.

An air guide 72 may be formed on the upper surface of the base plate 71. The air guide 72 is provided below the motor assembly 50 and connects the plate discharge port 719b at the housing lower hole 523 to guide the discharge of air cooling the motor while passing through the motor assembly 50. In other words, the air guide 72 forms independent airflow space from the motor assembly 50 to the discharge port.

The air guide 72 supports the lower end of the motor housing 52 and is formed so that the cooling fan 55 can be received therein. Therefore, when the cooling fan 55 is rotated, air passing through the motor housing 52 may flow along the air guide 72.

In addition, the guide hole 721 may be opened at an upper end of the air guide 72. When the bottom plate 71 is coupled to the inner case 32, the lower end of the motor assembly 50 may be seated around the guide hole 721 and the cooling fan 55 may be inserted by passing through the guide hole 721.

A wireless power device 73 may be provided on the lower surface of the base plate 71. The wireless power device 73 is for wireless power supply to the blender 1 and may be configured to include a plurality of ferrite cores and coils to receive power in an induced electromotive force method. Therefore, the wireless power device 73 can be supplied with power by induced electromotive force when the blender 1 is to be used wirelessly.

A bottom cover 74 may be provided below the base plate 71. The bottom cover 74 forms a lower surface of the main body 30 and is formed to shield the opened lower surface of the outer case 31. In addition, when the wireless power device 73 is mounted on the base plate 71, the wireless power device 73 may be shielded by the bottom cover 74.

The bottom cover 74 may be formed in a plate shape having a size corresponding to the opened lower surface of the outer case 31, and the circumference of the bottom cover 74 extends upward to be capable of coupling with the lower end of the outer case 31. In addition, a cover suction port 744 and a cover discharge port 746 may be formed on the bottom cover 74, and the inflow of external air and the discharge of air radiated from the inside of the main body 30 may be made through the cover suction port 744 and the cover discharge port 746.

Hereinafter, the structure of the display device 66 and the touch device 65 and the mounting structure thereof will be described in more detail with reference to the drawings.

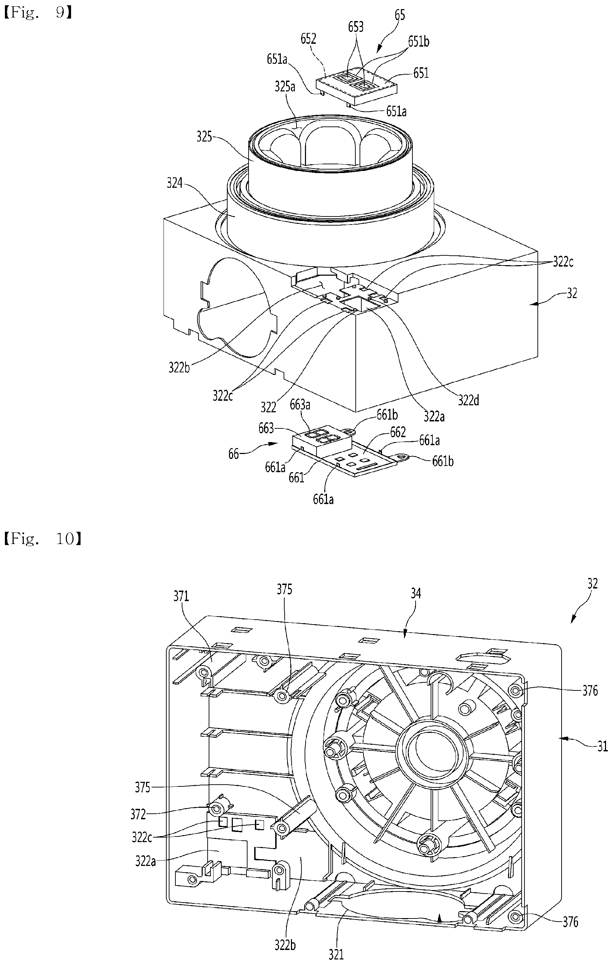

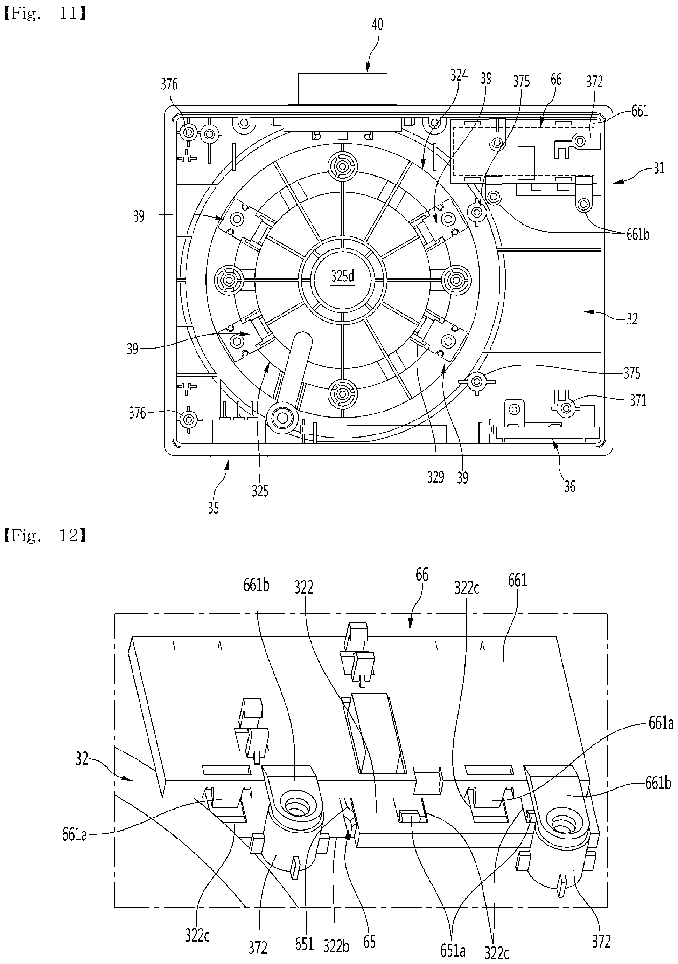

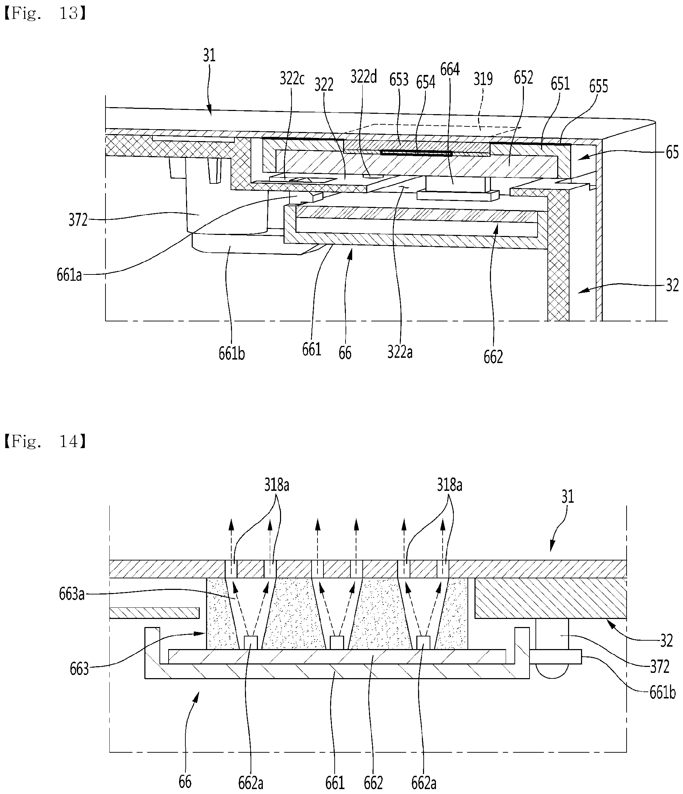

Fig. 9 is an exploded perspective view illustrating a coupling structure between an inner case which is one component of the main body 30, a touch device 65, and a display device 66, Fig. 10 is a perspective view illustrating the inner case as viewed from below, Fig. 11 is a bottom view illustrating the inside of the main body in a state where the touch device and the display device are mounted, Fig. 12 is an enlarged view illustrating a state where the touch device and the display device are mounted as viewed from below, Fig. 13 is a cross-sectional view taken along line XIII-XIII' of Fig. 2, and Fig. 14 is a cross-sectional view taken along line XIV-XIV' of Fig. 4.

As illustrated in the drawings, the inner case 32 may be formed in a hexahedral shape with a lower surface open. The inner case 32 may be inserted through the opened lower surface of the outer case 31 and may be completely received in the outer case 31.

In addition, a first seating portion 324 and a second seating portion 325 protruding upward may be formed to be stepped on the upper surface of the inner case 32. In addition, a sensing device receiving portion 329 in which a sensing device 39 for sensing the jar is mounted may be formed at a position corresponding to the second seating portion 325. The sensing device 39 may be disposed at a position corresponding to the inner surface of the second seating portion 325, and a plurality of sensing devices may be disposed radially based on the center of the second seating portion 325.

In addition, a structure for coupling with the base plate 71 shielding the opened lower surface of the inner case 32 may be provided inside the inner case 32. Looking at the coupling structure between the inner case 32 and the base plate 71, a plurality of bosses 371, 375, and 376 may be formed inside the inner case 32 for coupling with the base plate 71. The plurality of bosses 371, 375, and 376 may extend toward the opened lower surface from the upper surface inside the inner case 32.

Meanwhile, the mounting portion 322 may be formed on the upper surface of the inner case 32. The mounting portion 322 may be formed to be stepped at an edge of one surface of the upper surface of the inner case 32. For example, the mounting portion 322 may be formed in a shape recessed in an edge region formed by a front end and a right end of the upper surface of the inner case 32. In addition, the mounting portion 322 may be formed in a flat shape having a size in which the display device 66 and the touch device 65 can be mounted side by side.

In addition, the stepped height of the mounting portion 322 may be formed to a height corresponding to the height of the touch device 65. Therefore, when the inner case 32 and the outer case 31 are assembled in a state where the touch device 65 is mounted on the mounting portion 322, the upper surface of the touch device 65 may be in close contact with the lower surface of the outer case 31 with each other.

The mounting portion 322 may include a display opening 322b and a touch opening 322a. The display opening 322b may be opened at a position corresponding to a position where the display device 66 is mounted and may be formed to penetrate the mounting portion 322 in the vertical direction. Accordingly, a part of the display device 66 may pass through the display opening 322b and be directed toward the outer case 31.

In addition, the touch opening 322a may be opened at a position corresponding to a position where the touch device 65 is mounted. The touch opening 322a may penetrate the mounting portion 322 in the vertical direction and may be located at a side spaced apart from the display opening 322b. The touch opening 322a may be formed so that a connector 664 connecting the touch device 65 disposed on an upper surface of the mounting portion 322 and the display device 66 disposed on a lower surface of the mounting portion 322 passes therethrough.

Meanwhile, a support protrusion 322d may be formed outside the touch opening 322a. The support protrusion 322d may protrude upward from the mounting portion 322 corresponding to a position where the touch device 65 is mounted. The support protrusion 322d supports the touch device 65 from below so that the touch device 65 is in close contact with the lower surface of the outer case 31. In other words, the support protrusion 322d may have a height configuring such that the upper surface of the touch device 65 can be in close contact with the lower surface of the outer case 31. In addition, a plurality of support protrusions 322d may be formed and may be configured to support a plurality of points on the lower surface of the touch device 65 from the lower side of the touch device 65.

A fastening hole 322c may be formed on the mounting portion 322. The fastening hole 322c may be configured such that the fastening hook 661a formed on the touch device 65 and the display device 66 can be fastened. A plurality of fastening holes 322c may be formed and evenly disposed on the mounting portion 322 so that the touch device 65 and the display device 66 are fixedly mounted.

In addition, a case coupling portion 372 to allow the display device 66 to be mounted on the inner surface of the inner case 32 may be formed on the inside of the inner case 32. The case coupling portion 372 may be formed in a boss shape capable of fastening screws and may be formed to protrude downward from the inner upper surface of the inner case 32. In addition, the case coupling portion 372 is formed at a position corresponding to the case coupling portion 661b of the display device 66, and a screw penetrating the case coupling portion 661b can be fastened to the case coupling portion 372. Therefore, the display device 66 can be fixedly and securely mounted on the lower surface of the mounting portion 322.

Hereinafter, the structures of the touch device 65 and the display device 66 will be described in more detail.

As illustrated in Figs. 9, 13, and 14, the touch device 65 includes a touch PCB 652 on which a touch sensor 654 is mounted, and a touch PCB case 651 in which the touch PCB 652 is received.

A touch sensor 654 may be provided in the touch PCB 652. For example, the touch sensor 654 may be a touch sensor using a piezo-type piezoelectric element. Accordingly, the touch sensor 654 may sense a slight deformation of the outer case 31 so that a touch input is made when the pressing of the metal outer case 31 is manipulated.

A plurality of touch sensors 654 may be provided and may be located at positions corresponding to the touch manipulating portion 319. Therefore, when the user manipulates the touch manipulating portion 319, the touch sensor 654 can recognize the manipulation thereof.

The touch PCB case 651 may be formed to be opened downward and may be formed to a size in which the touch PCB 652 can be received. In addition, the touch PCB case 651 may be formed to have a size that can be seated on the mounting portion 322 without covering the display opening 322b when mounted on the mounting portion 322.

In addition, a touch case fastening hook 651a protruding downward may be formed around the touch PCB case 651. The touch case fastening hook 651a may be fastened to the fastening hole 322c formed on the mounting portion 322 when the touch device 65 is mounted. Of course, the touch PCB case 651 may be configured to be simply supported without having a separate constrained coupling structure on the mounting portion 322.

In addition, a case opening 651b may be formed on an upper surface of the touch PCB case 651, and a touch booster 653 may be provided in the case opening 651b. The case opening 651b may be located at a position corresponding to the touch sensor 654, and the touch booster 653 mounted on the case opening 651b may also be located above the touch sensor 654.

The touch booster 653 is for improving touch recognition of the touch sensor 654, may be made of plastic or rubber material and may have an elastically deformable material or structure. For example, the touch booster 653 may be cut in a spiral shape around the central portion, so that pressure applied to the touch booster 653 may be concentrated at the center portion. In other words, during the minute deformation of the outer case 31, it is possible to deform the touch booster 653 which is in close contact with the outer case 31, and further, the touch sensor 654 by the touch booster 653 can be pressed.

The touch manipulating portion 319, the touch booster 653, and the touch sensor 654 may be located on the same extension line. Accordingly, when the user touches the touch manipulating portion 319, the minute deformation of the outer case 31 is effectively transmitted to the touch sensor 654 through the touch booster 653, so that the recognition of the touch sensor 654 can be guaranteed.

Meanwhile, an adhesive member 655 may be provided on an upper surface of the touch PCB case 651. The adhesive member 655 may allow the upper surface of the touch PCB case 651 and the lower surface of the outer case 31 to adhere to each other. For example, the adhesive member 655 may be made of double-sided tape or adhesive. The adhesive member 655 may be entirely disposed on the upper surface of the touch PCB case 651 except for the case opening 651b and may be adhered to the lower surface of the outer case 31. Therefore, the upper surface of the touch device 65 always maintains a state of adhesion to the bottom surface of the outer case 31, and the touch sensor 654 can more effectively sense the touch manipulation through the touch booster 653 during touch manipulation of the outer case 31.

At least a part of the touch PCB 652 may be exposed through the touch opening 322a, and one end of the connector 664 may be connected to the touch PCB 652 through the touch opening 322a. The other end of the connector 664 may be connected to the display PCB 662 of the display device 66. Therefore, the touch PCB 652 and the display PCB 662 that are vertically disposed with respect to the mounting portion 322 may be electrically connected.

In addition, operations such as signal processing and power supply of the touch PCB 652 may be performed via the display PCB 662. Therefore, there is no need for a structure for disposing separate electric wires and the electric wires to be connected with the touch device 65 from the outside of the inner case 32, and an operable state can be achieved through connection with the display device 66.

The display device 66 may include a display PCB 662 in which the LED 662a is mounted and a display PCP case 661 in which the display PCP 662 is received.

A plurality of the LEDs 662a may be mounted on the display PCB 662. The plurality of LEDs 662a may be disposed to correspond to the disposition of the plurality of through-holes 318a formed on the display portion 318 of the outer case 31. In other words, the through-hole 318a through which light is transmitted may be determined according to the on and off of the plurality of LEDs 662a, and the display portion 318 can display operation information of the blender 1 in the form of letters or numbers through the through-holes 318a through which light is transmitted.

Meanwhile, a light guide 663 may be provided on the display PCB 662. The light guide 663 may be disposed at a position where the LED 662a is mounted among the display PCB 662. The light guide 663 guides the light emitted from the LED 662a toward the through-hole 318a and is formed to be capable of receiving the LED 662a therein.

In detail, a guide hole 663a corresponding to the shape of the through-hole 318a may be formed through the light guide 663. The guide hole 663a may penetrate the light guide 663 in the vertical direction. The through-hole 318a may be disposed at an upper end of the guide hole 663a, and the LED 662a may be disposed at a lower end of the guide hole 663a. In other words, the LED 662a may emit light from inside the guide hole 663a, and the light emitted from the LED 662a can be guided to transmit the corresponding through-hole along the guide hole 663a. A plurality of guide holes 663a may be formed and may be formed in a shape corresponding to the through-holes 318a.

In addition, the light guide 663 may be located inside the display opening 322b. In detail, the display PCB 662 is disposed below the mounting portion 322, and the light guide 663 penetrates the display opening 322b from below the mounting portion 322 to protrude upward. In addition, the upper surface of the light guide 663 may be in contact with the lower surface of the outer case 31. At this time, the position of the LED 662a may also be located in the inner region of the display opening 322b.

Meanwhile, the display PCB 662 may be located below the mounting portion 322 and may be located inside the inner case 32. In addition, the display PCB 662 may be received in the display PCB case 661. A display fastening hook 661a may be formed around the display PCB case 661. A plurality of display fastening hooks 661a may be provided and may be mounted in a fastening hole 322c formed in the mounting portion 322 so that the display device 66 can be fixed to the mounting portion 322.

In addition, a display case fastening portion 661b may protrude on one side of the display PCB case 661, and the display case fastening portion 661b is screwed to the case coupling portion 372 formed on the inner case 32 and thus coupled. The display device 66 may be fixedly mounted on the lower surface of the mounting portion 322 in more detail than the inner surface of the inner case 32 by fastening the screw.

Meanwhile, the display PCB 662 and the display PCB case 661 may extend below the touch PCB 652. In other words, the display PCB 662 and the touch PCB 652 may overlap each other when viewed from above. In addition, an overlapping portion between the display PCB 662 and the touch PCB 652 may be located at a position corresponding to or adjacent to the touch opening 322a. In addition, the display PCB 662 and the touch PCB 652 may be connected by the connector 664.

In a state where the connector 664 is mounted on the display PCB 662 or the touch PCB 652, when the touch device 65 and the display device 66 are assembled, the connector may be naturally coupled to the display PCB 662 or the touch PCB 652 which are opposite to each other. In other words, the display PCB 662 or the touch PCB 652 may be connected in a process of mounting the touch device 65 and the display device 66 to the mounting portion 322 without additional work for connecting a separate connector 664.

The inner case 32 may be inserted into the outer case 31 in a state where the display device 66 and the touch device 65 are disposed on the mounting portion 322. In addition, by assembling the inner case 32 and the outer case 31, the upper surface of the display device 66 and the upper surface of the touch device 65 may be in close contact with the inner surface of the outer case 31.

## Claims

1. A blender comprising:
an outer case (31) forming an outer appearance;
an inner case (32) disposed inside the outer case (31);
a jar (10) configured to be seated on a seating portion (301) formed on an upper surface of the inner case (32) and provided with a blade device (14) for crushing food;
a motor assembly (50) provided inside the inner case (32) and configured to be connected to the blade device (14) to rotate the blade device (14);
a mounting portion (322) recessed from the upper surface of the inner case (32); and
a touch device (65) mounted on the mounting portion (322) for inputting a user's manipulation,
**characterized in that** the outer case (31) is made of a metal material and the touch device (65) is in close contact with an inner surface of the outer case (31) and is configured to recognize touch manipulation on the outer case (31) by the user.

2. The blender of claim 1, wherein the mounting portion (322) is formed to be stepped on one side edge of the inner case (31) surface and a stepped height of the mounting portion (322) is formed to a height corresponding to the height of the touch device (65).

3. The blender of claim 1 or 2, wherein the outer case (31) is formed in a hexahedral shape with a lower surface open to receive the inner case (32) therein, and the inner case (32) is formed in a hexahedral shape with a lower surface open and is completely received in the outer case (31) when inserted through the opened lower surface of the outer case (31), and a base plate (71) is provided at a lower end of the inner case (32) to shield the opened lower surface of the inner case (32); and/or
wherein the touch device (65) is in close contact with the inner surface of the outer case (31) when the inner case (32) is mounted inside the outer case (31).

4. The blender of any one of the preceding claims, wherein the mounting portion (322) includes at least one support protrusion (322d) protruding to press and support the touch device (65) toward the outer case (31).

5. The blender of any one of the preceding claims, wherein a touch manipulating portion (319) for receiving a user's touch manipulation is formed on an upper surface of the outer case (31) corresponding to the touch device (65) by printing or surface processing.

6. The blender of any one of the preceding claims, wherein the touch device (65) includes at least one of:
a touch PCB (652), wherein a touch sensor (654) for sensing user's touch manipulation is mounted on the touch PCB (652);
a touch PCB case (651) for receiving the touch PCB (652); and
a touch booster (653) which is mounted on an upper surface of the touch PCB case (651) being in close contact with the inner surface of the outer case (31), the touch booster (653) is elastically deformable when the outer case (31) is touched and manipulated, to transmit pressure to the touch sensor (654).

7. The blender of claim 6, wherein a plurality of case fastening hooks extend downward along the circumference of the touch PCB case (651), wherein the mounting portion (322) includes a fastening hole (322c) into which the fastening hook (651a) is inserted to constrain the touch PCB case (651) and/or an adhesive member which adheres the touch PCB (652) to the outer case (31) is provided around a booster opening.

8. The blender of any one of the preceding claims, wherein the mounting portion (322) is further configured to accommodate a display device (66) for displaying an operating state of the blender, and wherein the display device (66) and the touch device (65) are shielded by the outer case (31) in a state of being mounted on the mounting portion (322).

9. The blender of claim 8, wherein the display device (66) includes at least one of:
a display PCB (662) in which a large number of LEDs (662a) are disposed, and
a display PCB case (661) in which the display PCB (662) is received.

10. The blender of claim 9, wherein the touch PCB (652) of the touch device (65) is disposed on the upper surface of the mounting portion (322) and the display PCB (662) of the display device (66) is disposed on the lower surface of the mounting portion (322), wherein the touch PCB (652) and the display PCB (662) are connected by a connector (664) passing through the recessed portion of the mounting portion (322).

11. The blender of claim 9 or 10, further comprising a display portion (318) comprising a plurality of through-holes (318a) are formed through the upper surface of the outer case (31), wherein the through-holes (318a) are formed at positions corresponding to the LEDs (662a) of the display device (66).

12. The blender of any one of the preceding claims 8-11, wherein the mounting portion (322) comprises a display opening (322b), which is opened at a position on which the display device (66) is mounted, wherein a portion of the display device (66) is disposed below the mounting portion (322), and a portion of the rest of the display device (66) protrudes upward through the display opening (322b).

13. The blender of any one of the preceding claims 8-12, wherein the display device (66) includes at least one of:
a display PCB (662) on which a plurality of LEDs (662a) are disposed,
a light guide (663) to be in contact with the inner surface of the outer case (31), and guides light emitted from a plurality of LEDs (662a) mounted on the display PCB (662) to the plurality of through-holes (318a) formed through the outer case (31).

14. The blender of claim 9, wherein the display PCB case (661) comprises a case fastening portion (661b) to which a screw for fixing the display device (66) is fastened, wherein a case coupling portion (372) to which a screw passing through the case fastening portion (661b) is fastened is formed inside the inner case (32).

15. The blender of claim 13, wherein a touch opening (322a) is formed on one side of the mounting portion (322) corresponding to the touch device (65), wherein the touch device (65) and the display device (66) are electrically connected by a connector passing through the touch opening (322a).

## Patentansprüche

1. Mixer, der Folgendes umfasst:
ein Außengehäuse (31), das ein äußeres Erscheinungsbild bildet;
ein Innengehäuse (32), das im Außengehäuse (31) angeordnet ist;
ein Gefäß (10), das so konfiguriert ist, dass es auf einem Aufnahmeabschnitt (301) sitzt, der an einer oberen Oberfläche des Innengehäuses (32) ausgebildet ist und mit einer Schneidvorrichtung (14) zum Zerkleinern von Lebensmitteln versehen ist;
eine Motoranordnung (50), die im Innengehäuse (32) vorgesehen ist und so konfiguriert ist, dass sie mit der Schneidvorrichtung (14) verbunden ist, um die Schneidvorrichtung (14) zu drehen;
einen Montageabschnitt (322), der von der oberen Oberfläche des Innengehäuses (32) vertieft ist; und
eine Berührungseingabevorrichtung (65), die am Montageabschnitt (322) zum Eingeben der Bedienung eines Benutzers montiert ist,
**dadurch gekennzeichnet, dass** das Außengehäuse (31) aus einem metallischen Material hergestellt ist und die Berührungseingabevorrichtung (65) in direktem Kontakt mit einer inneren Oberfläche des Außengehäuses (31) ist und konfiguriert ist, eine Berührungsbedienung am Außengehäuse (31) durch den Benutzer zu erkennen.

2. Mixer nach Anspruch 1, wobei der Montageabschnitt (322) so ausgebildet ist, dass er an einer Seitenkante der Oberfläche des Innengehäuses (31) gestuft ist und eine Stufenhöhe des Montageabschnitts (322) in einer Höhe ausgebildet ist, die der Höhe der Berührungseingabevorrichtung (65) entspricht.

3. Mixer nach Anspruch 1 oder 2, wobei das Außengehäuse (31) in einer Sechseckform ausgebildet ist, wobei eine untere Oberfläche offen ist, um das Innengehäuse (32) darin aufzunehmen, und wobei das Innengehäuse (32) in einer Sechseckform ausgebildet ist, wobei eine untere Oberfläche offen ist, und vollständig im Außengehäuse (31) aufgenommen ist, wenn es durch die offene untere Oberfläche des Außengehäuses (31) eingesetzt wird, und wobei eine Grundplatte (71) an einem unteren Ende des Innengehäuses (32) vorgesehen ist, um die offene untere Oberfläche des Innengehäuses (32) zu schützen; und/oder
wobei die Berührungseingabevorrichtung (65) mit der inneren Oberfläche des Außengehäuses (31) in direktem Kontakt ist, wenn das Innengehäuse (32) im Außengehäuse (31) montiert ist.

4. Mixer nach einem der vorhergehenden Ansprüche, wobei der Montageabschnitt (322) wenigstens einen Haltevorsprung (322d) aufweist, der vorsteht, um die Berührungseingabevorrichtung (65) in Richtung des Außengehäuses (31) zu pressen und zu halten.

5. Mixer nach einem der vorhergehenden Ansprüche, wobei ein Berührungsbedienungsabschnitt (319) zum Empfangen einer Berührungsbedienung eines Benutzers an einer oberen Oberfläche des Außengehäuses (31) entsprechend der Berührungseingabevorrichtung (65) durch Aufdrucken oder Oberflächenbearbeitung ausgebildet ist.

6. Mixer nach einem der vorhergehenden Ansprüche, wobei die Berührungseingabevorrichtung (65) wenigstens eines der folgenden Elemente umfasst:
eine Berührungssensor-Leiterplatine (652), wobei ein Berührungssensor (654) zum Erfassen der Berührungsbedienung eines Benutzers auf der Berührungssensor-Leiterplatine (652) montiert ist;
ein Gehäuse (651) für die Berührungssensor-Leiterplatine, um die Berührungssensor-Leiterplatine (652) aufzunehmen; und
ein Berührungsverstärkungselement (653), das auf einer oberen Oberfläche des Gehäuses (651) für die Berührungssensor-Leiterplatine montiert ist, das mit der inneren Oberfläche des Außengehäuses (31) in direktem Kontakt ist, wobei das Berührungsverstärkungselement (653) elastisch verformt werden kann, wenn das Außengehäuse (31) berührt und betätigt wird, um Druck auf den Berührungssensor (654) zu übertragen.

7. Mixer nach Anspruch 6, wobei sich mehrere Gehäusebefestigungshaken entlang des Umfangs des Gehäuses (651) für die Berührungssensor-Leiterplatine abwärts erstrecken, wobei der Montageabschnitt (322) ein Befestigungsloch (322c) aufweist, in das der Befestigungshaken (651a) eingesetzt ist, um das Gehäuse (651) für die Berührungssensor-Leiterplatine festzumachen, und/oder wobei ein Haftelement, das die Berührungssensor-Leiterplatine (652) am Außengehäuse (31) befestigt, um eine Verstärkungselementöffnung vorgesehen ist.

8. Mixer nach einen der vorhergehenden Ansprüche, wobei der Montageabschnitt (322) ferner konfiguriert ist, eine Anzeigevorrichtung (66) zum Anzeigen eines Betriebszustands des Mixers aufzunehmen, und wobei die Anzeigevorrichtung (66) und die Berührungseingabevorrichtung (65) in einem Zustand, in dem sie auf dem Montageabschnitt (322) montiert ist, durch das Außengehäuse (31) geschützt sind.

9. Mixer nach Anspruch 8, wobei die Anzeigevorrichtung (66) wenigstens eines der folgenden Elemente umfasst:
eine Anzeige-Leiterplatine (662), auf der eine große Anzahl LEDs (662a) angeordnet ist, und
ein Gehäuse (661) für die Anzeige-Leiterplatine, in dem die Anzeige-Leiterplatine (662) aufgenommen ist.

10. Mixer nach Anspruch 9, wobei die Berührungssensor-Leiterplatine (652) der Berührungseingabevorrichtung (65) an der oberen Oberfläche des Montageabschnitts (322) angeordnet ist und wobei die Anzeige-Leiterplatine (662) der Anzeigevorrichtung (66) an der unteren Oberfläche des Montageabschnitts (322) angeordnet ist, wobei die Berührungssensor-Leiterplatine (652) und die Anzeige-Leiterplatine (662) durch ein Verbindungselement (664) verbunden sind, das durch den vertieften Abschnitt des Montageabschnitts (322) verläuft.

11. Mixer nach Anspruch 9 oder 10, der ferner einen Anzeigeabschnitt (318) umfasst, der mehrere Durchgangslöcher (318a) umfasst, die durch die obere Oberfläche des Außengehäuses (31) ausgebildet sind, wobei die Durchgangslöcher (318a) an Positionen ausgebildet sind, die den LEDs (662a) der Anzeigevorrichtung (66) entsprechen.

12. Mixer nach einem der vorhergehenden Ansprüche 8-11, wobei der Montageabschnitt (322) eine Anzeigeöffnung (322b) umfasst, die an einer Position, an der die Anzeigevorrichtung (66) montiert ist, offen ist, wobei ein Abschnitt der Anzeigevorrichtung (66) unter dem Montageabschnitt (322) angeordnet ist, und wobei ein Abschnitt der restlichen Anzeigevorrichtung (66) durch die Anzeigeöffnung (322b) nach oben vorsteht.

13. Mixer nach einem der vorhergehenden Ansprüche 8-12, wobei die Anzeigevorrichtung (66) wenigstens eines der folgenden Elemente umfasst:
eine Anzeige-Leiterplatine (662), auf der mehrere LEDs (662a) angeordnet sind,
einen Lichtleiter (663), der mit der inneren Oberfläche des Außengehäuses (31) in Kontakt ist und Licht, das von mehreren LEDs (662a), die auf der Anzeige-Leiterplatine (662) montiert sind, emittiert wird, zu den mehreren Durchgangslöchern (318a) leitet, die durch das Außengehäuse (31) ausgebildet sind.

14. Mixer nach Anspruch 9, wobei das Gehäuse (661) für die Anzeige-Leiterplatine einen Gehäusebefestigungsabschnitt (661b) umfasst, an dem eine Schraube zum Fixieren der Anzeigevorrichtung (66) befestigt ist, wobei ein Gehäusekopplungsabschnitt (372), an dem eine Schraube, die durch den Gehäusebefestigungsabschnitt (661b) verläuft, befestigt ist, im Inneren des Innengehäuses (32) ausgebildet ist.

15. Mixer nach Anspruch 13, wobei eine Berührungseingabeöffnung (322a) auf einer Seite des Montageabschnitts (322) entsprechend der Berührungseingabevorrichtung (65) ausgebildet ist, wobei die Berührungseingabevorrichtung (65) und die Anzeigevorrichtung (66) durch ein Verbindungselement, das durch die Berührungseingabeöffnung (322a) verläuft, elektrisch verbunden sind.

## Revendications

1. Mélangeur comportant :
un boîtier extérieur (31) formant un aspect extérieur ;
un boîtier intérieur (32) disposé à l'intérieur du boîtier extérieur (31) ;
un récipient (10) configuré pour être en appui sur une partie d'appui (301) formée sur une surface supérieure du boîtier intérieur (32) et pourvu d'un dispositif à lame (14) pour écraser des aliments ;
un ensemble moteur (50) agencé à l'intérieur du boîtier intérieur (32) et configuré pour être relié au dispositif à lame (14) pour faire tourner le dispositif à lame (14) ;
une partie de montage (322) évidée à partir de la surface supérieure du boîtier intérieur (32) ; et
un dispositif tactile (65) monté sur la partie de montage (322) pour entrer une manipulation d'un utilisateur,
**caractérisé en ce que** le boîtier extérieur (31) est constitué d'un matériau métallique et le dispositif tactile (65) est en contact direct avec une surface intérieure du boîtier extérieur (31) et est configuré pour reconnaître une manipulation tactile du boîtier extérieur (31) par l'utilisateur.

2. Mélangeur selon la revendication 1, dans lequel la partie de montage (322) est formée pour être étagée sur un bord latéral de la surface du boîtier intérieur (31) et une hauteur étagée de la partie de montage (322) est formée jusqu'à une hauteur correspondant à la hauteur du dispositif tactile (65).

3. Mélangeur selon la revendication 1 ou 2, dans lequel le boîtier extérieur (31) est formé en forme d'hexaèdre avec une surface inférieure ouverte pour recevoir le boîtier intérieur (32) dans celle-ci, et le boîtier intérieur (32) est formé en forme d'hexaèdre avec une surface inférieure ouverte et est entièrement reçu dans le boîtier extérieur (31) lorsqu'il est inséré à travers la surface inférieure ouverte du boîtier extérieur (31), et une plaque de base (71) est agencée sur une extrémité inférieure du boîtier intérieur (32) pour protéger la surface inférieure ouverte du boîtier intérieur (32) ; et/ou
dans lequel le dispositif tactile (65) est en contact étroit avec la surface intérieure du boîtier extérieur (31) lorsque le boîtier intérieur (32) est monté à l'intérieur du boîtier extérieur (31).

4. Mélangeur selon l'une quelconque des revendications précédentes, dans lequel la partie de montage (322) inclut au moins une saillie de support (322d) faisant saillie pour presser et supporter le dispositif tactile (65) vers le boîtier extérieur (31).

5. Mélangeur selon l'une quelconque des revendications précédentes, dans lequel une partie de manipulation tactile (319) destinée à recevoir une manipulation tactile de l'utilisateur est formée sur une surface supérieure du boîtier extérieur (31) correspondant au dispositif tactile (65), par une impression ou un traitement de surface.

6. Mélangeur selon l'une quelconque des revendications précédentes, dans lequel le dispositif tactile (65) inclut au moins un élément parmi :
une PCB tactile (652), dans lequel un capteur tactile (654) destiné à détecter une manipulation tactile de l'utilisateur est monté sur la PCB tactile (652) ;
un boîtier de PCB tactile (651) destiné à recevoir la PCB tactile (652) ; et
un accélérateur tactile (653) qui est monté sur une surface supérieure du boîtier de PCB tactile (651) en étant en contact direct avec la surface intérieure du boîtier extérieur (31), l'accélérateur tactile (653) étant élastiquement déformable lorsque le boîtier extérieur (31) est touché et manipulé, pour transmettre une pression au capteur tactile (654).

7. Mélangeur selon la revendication 6, dans lequel une pluralité de crochets de fixation de boîtier s'étendent vers le bas le long de la circonférence du boîtier de PCB tactile (651), dans lequel la partie de montage (322) inclut un trou de fixation (322c) dans lequel le crochet de fixation (651a) est inséré pour contraindre le boîtier de PCB tactile (651) et/ou un élément adhésif qui fait adhérer la PCB tactile (652) au boîtier extérieur (31) est agencé autour d'une ouverture d'accélérateur.

8. Mélangeur selon l'une quelconque des revendications précédentes, dans lequel la partie de montage (322) est en outre configurée pour recevoir un dispositif d'affichage (66) pour afficher un état de fonctionnement du mélangeur, et dans lequel le dispositif d'affichage (66) et le dispositif tactile (65) sont protégés par le boîtier extérieur (31) dans un état où ils sont montés sur la partie de montage (322).

9. Mélangeur selon la revendication 8, dans lequel le dispositif d'affichage (66) inclut au moins un élément parmi :
une PCB d'affichage (662) dans laquelle un grand nombre de LED (662a) sont disposées, et
un boîtier de PCB d'affichage (661) dans lequel la PCB d'affichage (662) est reçue.

10. Mélangeur selon la revendication 9, dans lequel la PCB tactile (652) du dispositif tactile (65) est disposée sur la surface supérieure de la partie de montage (322) et la PCB d'affichage (662) du dispositif d'affichage (66) est disposée sur la surface inférieure de la partie de montage (322), dans lequel la PCB tactile (652) et la PCB d'affichage (662) sont reliées par un connecteur (634) passant à travers la partie évidée de la partie de montage (322).

11. Mélangeur selon la revendication 9 ou 10, comportant en outre une partie d'affichage (318) comportant une pluralité de trous traversants (318a) formés à travers la surface supérieure du boîtier extérieur (31), dans lequel les trous traversants (318a) sont formés à des positions correspondant aux LED (662a) du dispositif d'affichage (66).

12. Mélangeur selon l'une quelconque des revendications 8 à 11 précédentes, dans lequel la partie de montage (322) comporte une ouverture d'affichage (322b), qui est ouverte à une position sur laquelle le dispositif d'affichage (66) est monté, dans lequel une partie du dispositif d'affichage (66) est disposée sous la partie de montage (322), et une partie du reste du dispositif d'affichage (66) fait saillie vers le haut à travers l'ouverture d'affichage (322b).

13. Mélangeur selon l'une quelconque des revendications 8 à 12 précédentes, dans lequel le dispositif d'affichage (66) inclut au moins un élément parmi :
une PCB d'affichage (662) sur laquelle des LED (662a) sont disposées en pluralité,
un conduit de lumière (663) pour être en contact avec la surface intérieure du boîtier extérieur (31) et guidant la lumière émise à partir d'une pluralité de LED (662a) montées sur la PCB d'affichage (662) jusqu'à la pluralité de trous traversants (318a) formés à travers le boîtier extérieur (31).

14. Mélangeur selon la revendication 9, dans lequel le boîtier de PCB d'affichage (661) comporte une partie de fixation de boîtier (661b) à laquelle est fixée une vis pour fixer le dispositif d'affichage (66), dans lequel une partie de couplage de boîtier (372) à laquelle est fixée une vis passant à travers la partie de fixation de boîtier (661b), est formée à l'intérieur du boîtier intérieur (32).

15. Mélangeur selon la revendication 13, dans lequel une ouverture tactile (322a) est formée sur un côté de la partie de montage (322) correspondant au dispositif tactile (65), dans lequel le dispositif tactile (65) et le dispositif d'affichage (66) sont électriquement reliés par un connecteur passant à travers l'ouverture tactile (322a).
